# EUROPEAN PATENT APPLICATION

(11) **EP 4 749 112 A1**
(43) Date of publication of application: **27.05.2026**
(21) Application number: 24214335.2
(22) Date of filing: 20.11.2024
(51) Int. Cl.: F02D 19/02, F02D 41/00, F02M 21/02, B60K 15/03, B60K 15/063, G01F 22/02, F17C 13/02, F02D 19/06

(54) **CONTROL OF FUEL DELIVERY PRESSURE BASED ON DETERMINED MASS OF REMAINING FUEL FOR A VEHICLE**

(71) Applicant: Volvo Truck Corporation, 405 08 Göteborg (SE)
(72) Inventor: MOHLIN, Anders, KUNGSBACKA (SE); SOMHORST, Joop, GÖTEBORG (SE)
(74) Representative: Ström & Gulliksson AB

(57) **Abstract**

A method includes measuring, by a pressure sensor (221), a pressure of pressurized gaseous fuel in a gaseous fuel tank of a vehicle (100). The method further includes determining, by a processing circuitry, a mass of remaining gaseous fuel in the fuel tank based on an operation cycle of a liquid fluid pump (226) that pumps a liquid fluid into a liquid fluid reservoir in fluid communication with the gaseous fuel tank. The method further includes controlling, by the processing circuitry, the liquid fluid pump to maintain the pressure of the gaseous fuel between a minimum pressure and a maximum pressure.

## Description

### TECHNICAL FIELD

The disclosure relates generally to control of fuel delivery for vehicles. In particular aspects, the disclosure relates to control of fuel delivery pressure based on a determined mass of remaining fuel for a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Many engines using gaseous fuel, such as a hydrogen internal combustion engine, have high efficiency and high power density, but also typically require a high fuel injection pressure. The fuel is typically stored on the vehicle in a number of high pressure gas tanks. As the fuel is used, the pressure in the tanks drops below the desired fuel injection pressure, at which point the fuel pressure is insufficient to supply fuel to the engine. There is a need for a fuel storage and delivery arrangement that provides a larger amount of available fuel to the engine during operation.

### SUMMARY

According to a first aspect of the disclosure, a method includes measuring, by a pressure sensor, a pressure of pressurized gaseous fuel in a gaseous fuel tank of a vehicle. The method further includes determining, by the processing circuitry, a mass of remaining gaseous fuel in the fuel tank based on an operation cycle of a liquid fluid pump that pumps a liquid fluid into a liquid fluid reservoir in fluid communication with the gaseous fuel tank. The method further includes controlling, by processing circuitry, the liquid fluid pump to maintain the pressure of the gaseous fuel between a minimum pressure and a maximum pressure. The first aspect of the disclosure may seek to determine a mass of remaining fuel to achieve a technical benefit including maintaining the fuel above a minimum pressure to expel a liquid fluid from the tank before refilling the tank with fuel.

Optionally in some examples, including in at least one preferred example, determining the mass of remaining gaseous fuel in the fuel tank further comprises determining, by the processing circuitry, of a number of revolutions of the liquid fuel pump during a predetermined time period, and determining the mass of remaining gaseous fuel in the fuel tank based on the determined number of revolutions of the liquid fuel pump and a current measured pressure of the gaseous fuel.

Optionally in some examples, including in at least one preferred example, determining the mass of remaining gaseous fuel in the fuel tank further comprises determining, based on the determined number of revolutions of the liquid fuel pump, a volume of the fluid pumped by the liquid fuel pump during the predetermined time period.

Optionally in some examples, including in at least one preferred example, determining the mass of remaining gaseous fuel in the fuel tank further comprises determining, by the processing circuitry, a rate of change of a volume of the liquid fluid (dV) pumped by the liquid fluid pump during a predetermined time period, determining, by the processing circuitry, a rate of change a change of the pressure (dP) of the gaseous fuel in the predetermine time period, determining, by the processing circuitry, a relationship between dP and dV, and determining, by the processing circuitry, the mass of remaining gaseous fuel in the fuel tank based on the determined relationship.

Optionally in some examples, including in at least one preferred example, determining, by the processing circuitry, a relationship between dP and dV comprises calculating, by the processing circuitry, a derivative of the rate of change of the pressure vs. the rate of change of the volume of liquid fluid (dP/dV), and determining the mass of remaining gaseous fuel in the fuel tank based on the calculated derivative.

Optionally in some examples, including in at least one preferred example, the method further comprises displaying, by a fuel gauge of the vehicle, an indication the determined mass of remaining gaseous fuel.

Optionally in some examples, including in at least one preferred example, the gaseous fuel tank comprises a flexible bladder disposed in the liquid fuel reservoir such that pumping the fluid into the liquid flue reservoir applies pressure to the flexible bladder to increase the pressure of the gaseous fuel.

Optionally in some examples, including in at least one preferred example, the gaseous fuel tank comprises a fuel side of a movable piston disposed in a fluid container, and the liquid fluid reservoir comprises a fluid side of the movable piston in the fluid container, such that pumping the fluid into the liquid fluid side of the movable piston causes the piston to move toward the fuel side to compress the fuel in the fuel side of the fluid container.

According to a second aspect of the disclosure, a gaseous fuel system includes a gaseous fuel tank for storing pressurized gaseous fuel, a pressure sensor for measuring a pressure of the pressurized gaseous fuel in the gaseous fuel tank, a liquid fluid pump for pumping a liquid fluid into a liquid fluid reservoir in fluid communication with the gaseous fuel tank to apply increase the pressure of the gaseous fuel, and processing circuitry in communication with the liquid fuel pump. The processing circuitry controls the liquid fuel pump to determine a mass of remaining gaseous fuel in the fuel tank based on an operation cycle of the liquid fluid pump, and control the liquid fluid pump to maintain the pressure of the gaseous fuel between a minimum pressure and a maximum pressure. The second aspect of the disclosure may seek to determine a mass of remaining fuel to achieve a technical benefit including maintaining the fuel above a minimum pressure to expel a liquid fluid from the tank before refilling the tank with fuel.

Optionally in some examples, including in at least one preferred example, the determination of the mass of remaining gaseous fuel in the fuel tank further comprises a determination, by the processing circuitry, of a number of revolutions of the liquid fuel pump during a predetermined time period, and a determination of the mass of remaining gaseous fuel in the fuel tank based on the determined number of revolutions of the liquid fuel pump and a current measured pressure of the gaseous fuel.

Optionally in some examples, including in at least one preferred example, the determination the mass of remaining gaseous fuel in the fuel tank further comprises a determination, based on the determined number of revolutions of the liquid fuel pump, a volume of the fluid pumped by the liquid fuel pump during the predetermined time period.

Optionally in some examples, including in at least one preferred example, the determination the mass of remaining gaseous fuel in the fuel tank further comprises a determination, by the processing circuitry, a rate of change of a volume of the liquid fluid (dV) pumped by the liquid fluid pump during a predetermined time period, a determination, by the processing circuitry, a rate of change a change of the pressure (dP) of the gaseous fuel in the predetermine time period, a determination, by the processing circuitry, a relationship between dP and dV, and a determination, by the processing circuitry, the mass of remaining gaseous fuel in the fuel tank based on the determined relationship.

Optionally in some examples, including in at least one preferred example, the determination, by the processing circuitry, a relationship between dP and dV comprises a calculation, by the processing circuitry, a derivative of the rate of change of the pressure vs. the rate of change of the volume of liquid fluid (dP/dV), and the determination the mass of remaining gaseous fuel in the fuel tank based on the calculated derivative.

Optionally in some examples, including in at least one preferred example, the system further comprises a fuel gauge, wherein the instructions further cause the processing circuitry to cause the fuel gauge to display an indication of the determined mass of remaining gaseous fuel.

Optionally in some examples, including in at least one preferred example, the gaseous fuel tank comprises a flexible bladder disposed in the liquid fuel reservoir such that pumping the fluid into the liquid flue reservoir applies pressure to the flexible bladder to increase the pressure of the gaseous fuel.

Optionally in some examples, including in at least one preferred example, the gaseous fuel tank comprises a fuel side of a movable piston disposed in a fluid container, and the liquid fluid reservoir comprises a fluid side of the movable piston in the fluid container, such that pumping the fluid into the liquid fluid side of the movable piston causes the piston to move toward the fuel side to compress the fuel in the fuel side of the fluid container.

According to a third aspect of the disclosure, a non-tangible computer readable medium includes machine-readable instructions that, when executed by processing circuitry, cause the processing circuitry to measure a pressure of pressurized gaseous fuel in a gaseous fuel tank of a vehicle. The instructions further cause the processing circuitry to determine, by the processing circuitry, a mass of remaining gaseous fuel in the fuel tank based on an operation cycle of a liquid fluid pump that pumps a liquid fluid into a liquid fluid reservoir in fluid communication with the gaseous fuel tank. The instructions further cause the processing circuitry to control, by processing circuitry, the liquid fluid pump to maintain the pressure of the gaseous fuel between a minimum pressure and a maximum pressure. The third aspect of the disclosure may seek to determine a mass of remaining fuel to achieve a technical benefit including maintaining the fuel above a minimum pressure to expel a liquid fluid from the tank before refilling the tank with fuel.

Optionally in some examples, including in at least one preferred example, determining the mass of remaining gaseous fuel in the fuel tank further comprises determining, by the processing circuitry, of a number of revolutions of the liquid fuel pump during a predetermined time period, determining, based on the determined number of revolutions of the liquid fuel pump, a volume of the fluid pumped by the liquid fuel pump during the predetermined time period, and determining the mass of remaining gaseous fuel in the fuel tank based on the determined volume of the fluid pumped by the liquid fuel pump and a current measured pressure of the gaseous fuel.

Optionally in some examples, including in at least one preferred example, determining the mass of remaining gaseous fuel in the fuel tank further comprises determining, by the processing circuitry, a rate of change of a volume of the liquid fluid (dV) pumped by the liquid fluid pump during a predetermined time period, determining, by the processing circuitry, a rate of change a change of the pressure (dP) of the gaseous fuel in the predetermine time period, calculating, by the processing circuitry, a derivative of the rate of change of the pressure vs. the rate of change of the volume of liquid fluid (dP/dV), and determining, by the processing circuitry, the mass of remaining gaseous fuel in the fuel tank based on the calculated derivative.

Optionally in some examples, including in at least one preferred example, the instructions further cause the processing circuitry to cause a fuel gauge of the vehicle to display an indication the determined mass of remaining gaseous fuel.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is an exemplary system diagram of a fuel delivery control system for a vehicle, according to an example.
FIG. 2 illustrates a diagram of a single-tank fuel delivery system, according to an example.
FIG. 3 illustrates an operation cycle graph for the system of FIG. 2, according to an example.
FIG. 4 is a flow chart of operations for an exemplary method to control fuel delivery for a vehicle, according to an example.
FIG. 5 illustrates a graph of fuel pressure (P) vs. a volume of fluid (V) pumped by the fluid pump for different masses of remaining fuel, according to an example.
Fig. 6 illustrates a graph of fuel pressure (P) vs. fluid volume (V) showing changes in pressure during an entire fluid delivery portion of the operation cycle, according to an example.
FIGS. 7A-7C illustrate a plurality of different mechanisms that may be used for maintaining separation between gaseous fuel and liquid fluid in a fuel tank, according to an example.
FIGS. 8A-8C illustrate a three-tank system configured to supply fuel to an engine from three fuel tanks in sequence, according to an example.
FIG. 9 is a schematic diagram of a computer system 900 for implementing examples disclosed herein.

### DETAILED DESCRIPTION

The detailed description set forth below provides information and examples of the disclosed technology with sufficient detail to enable those skilled in the art to practice the disclosure.

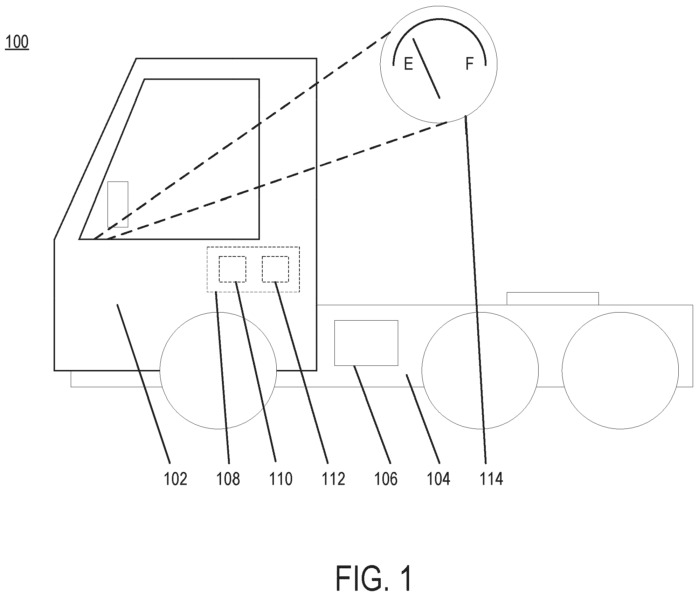

FIG. 1 is an exemplary system diagram of a fuel delivery control system for a vehicle 100, according to an example. The vehicle 100, which is heavy truck in this example, includes a cab 102 and a chassis 104, and with one or more hydrogen fuel tanks 106 mounted to the chassis 104. It should be understood that, while the described embodiments herein are primarily directed to hydrogen fuel-based fuel systems, it should be understood that other types of fuel systems, fuel types, and/or engine types may be used, as desired.

The vehicle 100 further includes a computer system 108 including processing circuitry 110 and a memory 112 for controlling functions of the vehicle 100, including regulating fuel delivery from the fuel tank 106 in accordance with embodiments described herein. In this example, the vehicle 100 further includes a fuel gauge 114, for displaying an indication of remaining fuel, such as an indication of a remaining mass of fuel, a remaining range estimate, and/or any other information relevant to the fuel system of the vehicle.

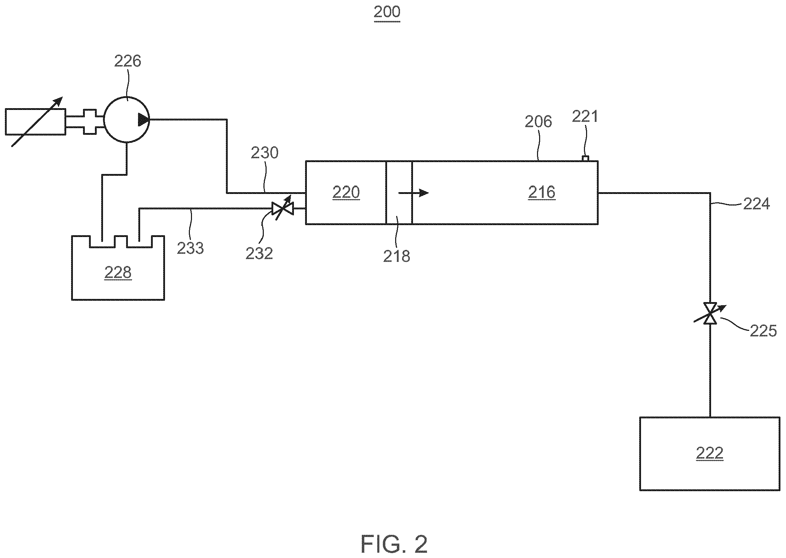

Referring now to FIG. 2, a diagram of a single-tank fuel delivery system 200 is illustrated, according to an example. The system 200 includes a fuel tank 206 containing a volume of gaseous fuel 216 (hydrogen gas in this embodiment) with a current fuel pressure. The fuel tank 206 further includes a movable piston 218 separating the fuel 216 on a fuel side of the piston 218 from a liquid fluid 220 on an opposite fluid side of the piston 218. A fuel pressure sensor 221 may also be located on the fuel side of the piston 218 to measure a current fuel pressure.

When the tank 206 is full of fuel 216, the fuel pressure is greater than a minimum working pressure for delivering the fuel to an engine 222 (which is in an Internal Combustion Engine (ICE) in this embodiment) via a fuel line 224. A pressure control valve 225 in the fuel line 224 regulates the pressure of the fuel 216 to deliver the fuel 216 to the engine 222 at a desired engine pressure.

As the fuel is consumed, the current fuel pressure decreases and approaches the minimum working pressure. To prevent the fuel pressure from falling below the minimum working pressure, the liquid fluid 220 is pumped into the fuel tank 206, which moves the piston 218 to compress and increase the pressure of the remaining volume of fuel 216. In this example, a fluid pump 226 pumps the liquid fluid 220 from a reservoir 228 into the fuel tank 206 via an intake line 230.

After the mass of remaining fuel 216 eventually reaches a minimum level, an outlet valve 232 may open to permit the fluid 220 to be returned to the reservoir 228 via an outlet line 233. In this example, the minimum level of fuel 216 retains a sufficient fuel pressure to move the piston 218 back to its initial position and expel the liquid fluid 220.

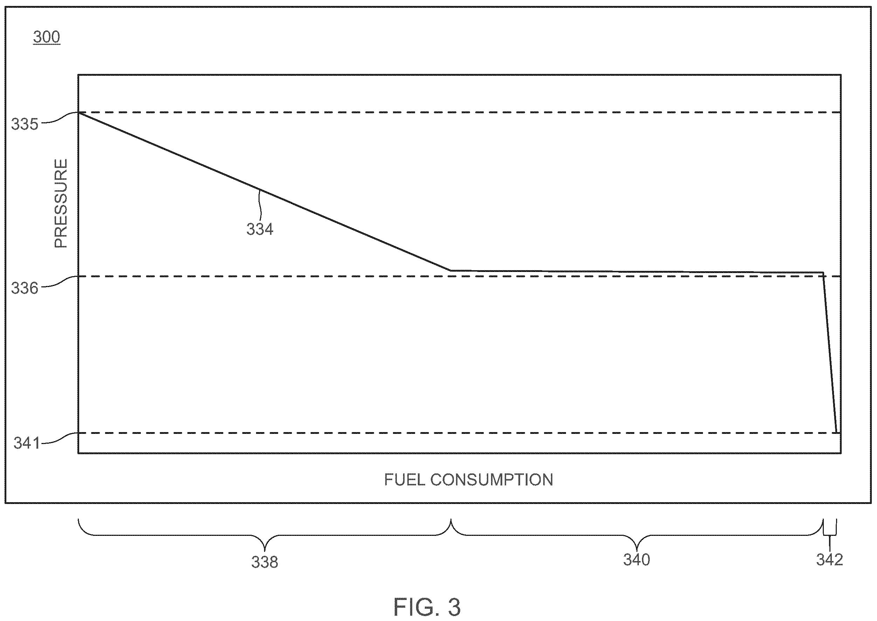

Referring now to FIG. 3, an operation cycle graph 300 for the system 200 of FIG. 2 is illustrated. As noted above, the fuel pressure 334 begins at a maximum pressure 335 and remains above the minimum working pressure 336 for a first portion 338 of the cycle. As the fuel pressure 334 approaches the minimum working pressure 336, liquid fluid is pumped into the fuel tank to maintain the fuel pressure 334 above the minimum working pressure 336 for a second portion 340 of the cycle. When a minimum fuel level is reached, fuel delivery stops and the remaining fuel pressure is allowed to force the fluid out of the fuel tank for a third portion 342 of the cycle.

Optimally, the second portion 340 of the cycle should continue as long as possible so that the maximum amount of fuel is delivered to the engine. At the same time, if the second portion 340 of the cycle continues for too long, the remaining mass of fuel in the fuel tank will be insufficient to maintain the fuel pressure above the minimum fluid pressure long enough to expel all of the fluid from the fuel tank during the third portion 342 of the cycle. By accurately determining the actual mass of remaining fuel in the fuel tank, the length of the second portion 340 of the cycle can be optimized to maximize fuel delivery while reducing the risk of the fuel pressure falling below the minimum fluid pressure 341 during the third portion 342 of the cycle.

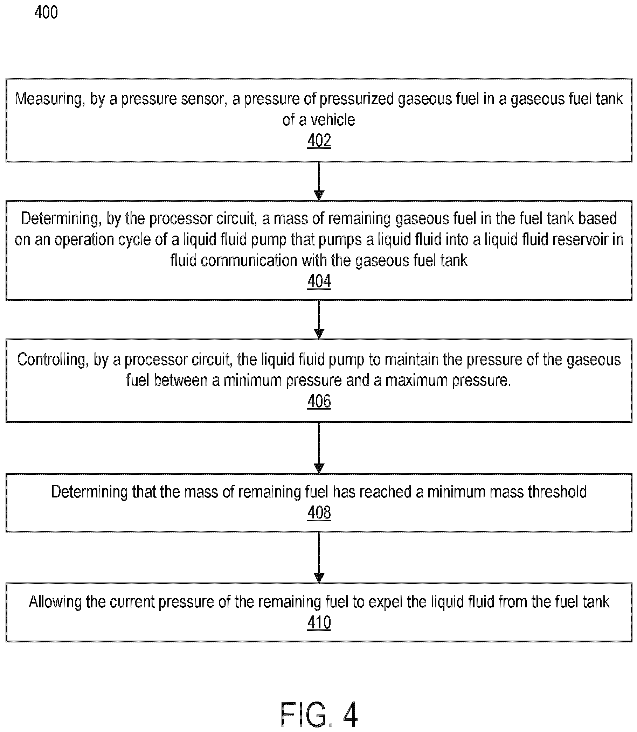

To address this technical problem, FIG. 4 is a flow chart of operations 400 for an exemplary method to control fuel delivery for a vehicle, according to an example. The operations 400 may include measuring, by a pressure sensor, a pressure of pressurized gaseous fuel in a gaseous fuel tank of a vehicle (Block 402). For example, the fuel pressure sensor 221 of FIG. 2 may take periodic and/or continuous pressure measurements of the fuel 216 in the fuel tank 206.

The operations 400 of FIG. 4 may further include determining, by the processing circuitry, a mass of remaining gaseous fuel in the fuel tank based on an operation cycle of a liquid fluid pump that pumps a liquid fluid into a liquid fluid reservoir in fluid communication with the gaseous fuel tank (Block 404). As will be discussed in examples below, the determination of the mass of remaining fuel may be accomplished in several ways.

The operations 400 of FIG. 4 may further include controlling, by processing circuitry, the liquid fluid pump to maintain the pressure of the gaseous fuel between a minimum pressure and a maximum pressure (Block 406). For example, the fluid pump 226 of FIG. 2 may be operated based on current fuel pressure measurements and the determined remaining mass of fuel 216 to maintain the pressure of the fuel 216 above the minimum working pressure for the engine 222.

The operations 400 of FIG. 4 may further optionally include, determining that the mass of remaining fuel has reached a minimum mass threshold (Block 408) and allowing the current pressure of the remaining fuel to expel the liquid fluid from the fuel tank (Block 410). For example, when it is determined that the mass of remaining fuel 216 in FIG. 2 has reached the minimum mass threshold, the pump 226 may be turned off and the outlet valve 232 may be opened to allow the remaining fuel pressure to expel the fluid 220 from the tank 206 so that the tank 206 can be refilled.

In some examples, determining the mass of remaining gaseous in the fuel tank (Block 406) may further include determining a number of revolutions of the liquid fuel pump during a predetermined time period. This determination allows a total volume of fluid that has been pumped into the fuel tank to be calculated, which in turn allows the volume of remaining fuel to also be calculated. Based on the calculated volume of remaining fuel and the current fuel pressure, the mass of remaining fuel in the fuel tank may be calculated. As noted above, once the mass of remaining fuel has reached the minimum mass threshold, the remaining fuel pressure may be allowed to expel the fluid from the tank so that the tank can be refilled.

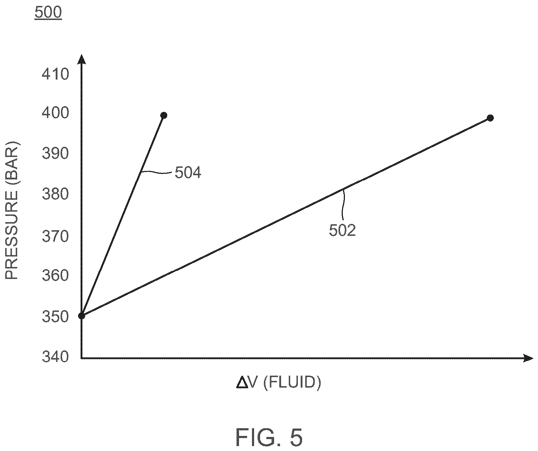

In some examples, determining the mass of remaining gaseous in the fuel tank (Block 406) may further include determining a rate of change of a volume of the liquid fluid (dV) pumped by the liquid fluid pump during a predetermined time period, and determining a rate of change a change of the pressure (dP) of the gaseous fuel in the predetermine time period. In this regard, FIG. 5 illustrates a graph 500 of fuel pressure (P) vs. a volume of fluid (V) pumped by the fluid pump for different masses of remaining fuel. For example, when the mass of remaining fuel is relatively high (e.g., 50%) at the beginning of the fluid delivery portion of the operation cycle, the volume of fluid required to raise the pressure of the remaining fuel from a minimum level (e.g., 350 bar) to a target level (e.g., 400 bar) is also relatively high because a large volume of fluid is required to compress the larger mass of gaseous fuel to a sufficiently small volume to reach the target pressure. Accordingly, for any given pumping speed, a plot 502 of fuel pressure (P) vs. fluid volume (V) for this higher mass of remaining fuel will have a smaller slope (i.e., a lower derivative dP/dV). When the mass of remaining fuel is lower, e.g., 10%, the additional volume of fluid required to maintain the remaining fuel in a desired pressure range is reduced, because less fluid is required to displace the remaining mass of fuel to reach the same target fuel pressure. Accordingly, for any given pumping speed, a plot 504 of fuel pressure (P) vs. fluid volume (V) for this lower mass of remaining fuel will have a higher slope (i.e., a higher derivative dP/dV).

In some examples, the calculation of the remaining fuel based on the derivative dP/dV may also take ongoing fuel consumption by the engine into account. For example, in typical operation, the engine may be operating while the hydraulic fluid is being delivered to the fuel tank. This may result in a lower rise in pressure than would be measured in the absence of ongoing fuel consumption by the engine. Accordingly, by taking a rate of fuel consumption (e.g., dV/dt) into account, the calculation of the remaining fuel in the fuel tank may be more accurately determined.

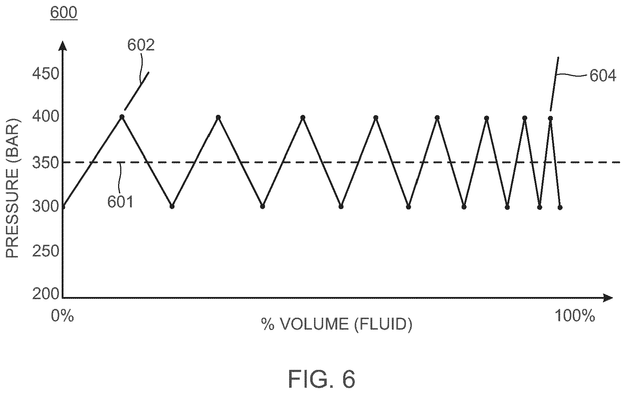

Referring now to FIG. 6, a graph 600 of fuel pressure (P) vs. fluid volume (V) illustrates changes in pressure during an entire fluid delivery portion of the operation cycle (e.g., corresponding to the second portion 340 of the cycle shown in FIG. 3). Before the fluid delivery portion of the cycle begins, the fuel occupies 100% of the available tank volume. When the fuel pressure reaches as minimum threshold, e.g., 300 bar in this example, the fluid delivery portion of the cycle begins and fluid is pumped into the fuel tank until the fuel pressure reaches a target pressure (e.g., 400 bar in this example).

The fluid delivery is then suspended, and the fuel pressure causes fuel to be delivered to the engine until the fuel pressure again reaches the minimum threshold, such that pressure is maintained near a desired average working pressure 601, e.g., 350 bar in this example. Fluid delivery is then resumed until the fuel pressure reaches the target pressure, and so on.

As shown by FIG. 6, as the mass of the remaining fuel decreases, the volume required to compress the remaining fuel from the minimum pressure to the target pressure also decreases. Accordingly, the derivative relationship between dP and dV corresponds to a mass of remaining fuel, and by calculating the derivative dP/dV at any given point of the cycle, the mass or remaining fuel can be determined for that point as well. For example, a smaller derivative 602 may indicate a smaller proportion of fluid to fuel, while a larger derivative 604 may indicate a larger proportion of fluid to fuel, such that fuel delivery can be suspended before the fuel is depleted past the point of being able to provide a minimum fluid pressure to return the fluid to the reservoir.

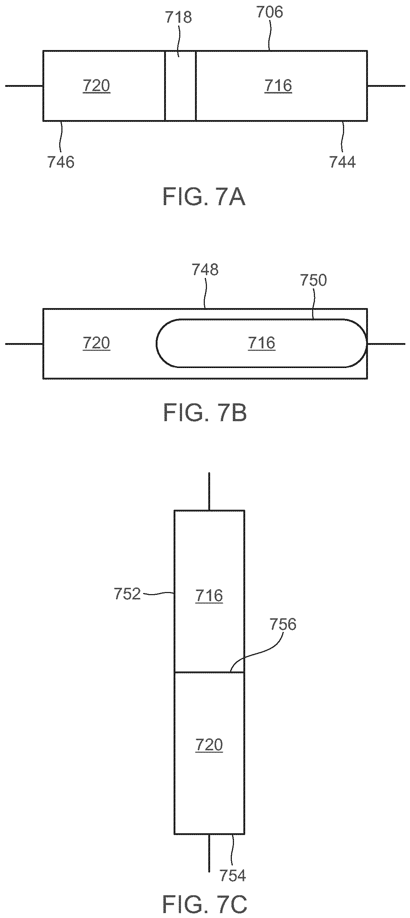

Referring now to FIGS. 7A-7C, different mechanisms may be used for maintaining separation between the gaseous fuel and liquid fluid in the fuel tank. In this regard, FIG. 7A illustrates a fuel tank 706 with a piston 718 that is longitudinally movable between a fuel side 744 containing the fuel 716 and a fluid side 746 containing the fluid 720, such that the volumes of the fuel side 744 and the fluid side 746 are changeable based on the longitudinal position of the piston 718. In this example, a lubricant may provide a seal around the piston 718 to maintain separation between the fuel 716 and the fluid 720 and to inhibit cross-contamination while allowing for longitudinal movement of the piston 718.

FIG. 7B illustrates an alternative fuel tank 748 with the gaseous fuel 716 contained in a flexible bladder 750 that is impermeable to the fuel 716 and the fluid 720. One advantage of this arrangement over the piston-based arrangement of FIG. 7A is that separation between the fuel 716 and the fluid 720 can be more easily maintained and cross-contamination can be greatly reduced and/or eliminated.

FIG. 7C illustrates an alternative fuel tank 752 that is vertically oriented, such that the denser liquid fluid 720 naturally collects at a bottom end 754 of the tank 752 and the less dense gaseous fuel 716 floats vertically above the liquid, with a free surface 756 therebetween. This arrangement has an advantage of being less complex, but may be limited to certain applications where the fuel tank 752 can remain stationary and/or can be subjected to less movement and/or vibration, to avoid unwanted agitation and/or mixing of the fuel 716 and the fluid 720.

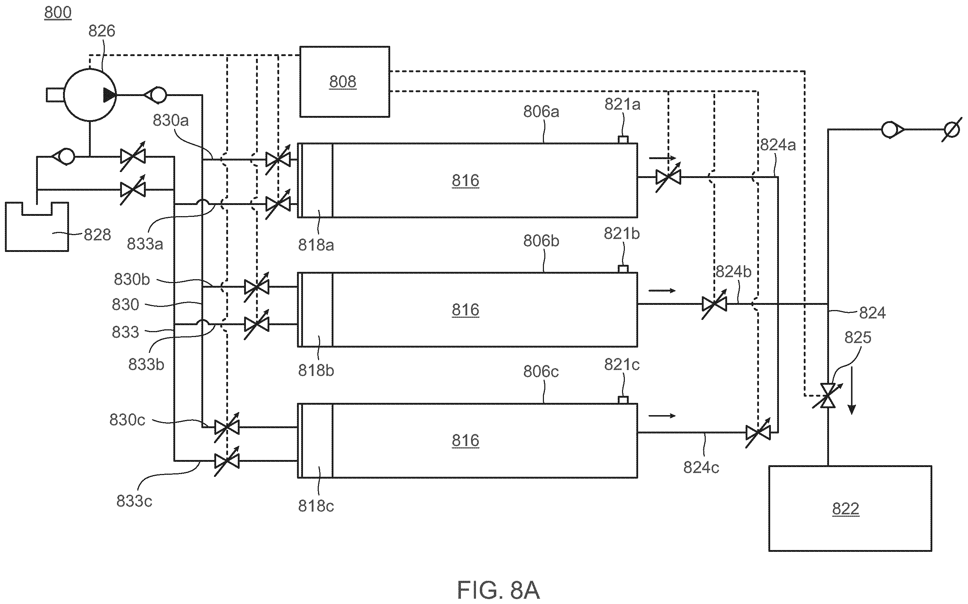

The embodiments described herein can be applied to different fuel systems of varying complexity. In this regard, FIGS. 8A-8C illustrate a three-tank system 800 configured to supply fuel 816 to an engine 822 from three fuel tanks 806a-806c in sequence. Each fuel tank 806a-806c includes a fuel pressure sensor 821a-821c, a longitudinally movable piston 818a-818c, a fluid intake line 830a-830c and a fluid outlet line 833a-833c for receiving and returning the fluid 820 from and to a reservoir 828, and a fuel line 824a-824c on the fuel side 844 of the tank 806a-806c for supplying fuel 816 to the engine 822.

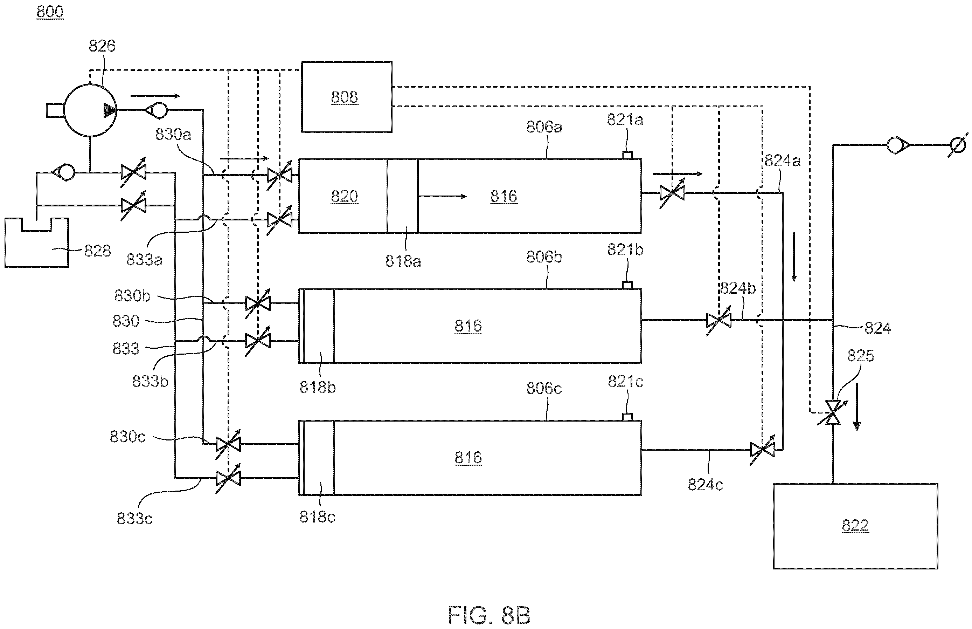

As shown by FIG. 8A, a control system 808 opens a first fuel line 824a for the first tank 806a to supply fuel 816 from the first tank 806a to the engine 822. As shown by FIG. 8B, when the fuel pressure reduces to a minimum working pressure, the control system 808 controls the pump 826 and first intake line 830a to selectively pump fluid 820 into the first fuel tank 806a to maintain the fuel 816 above a minimum working pressure until the minimum mass of fuel in the first tank 806a has been reached.

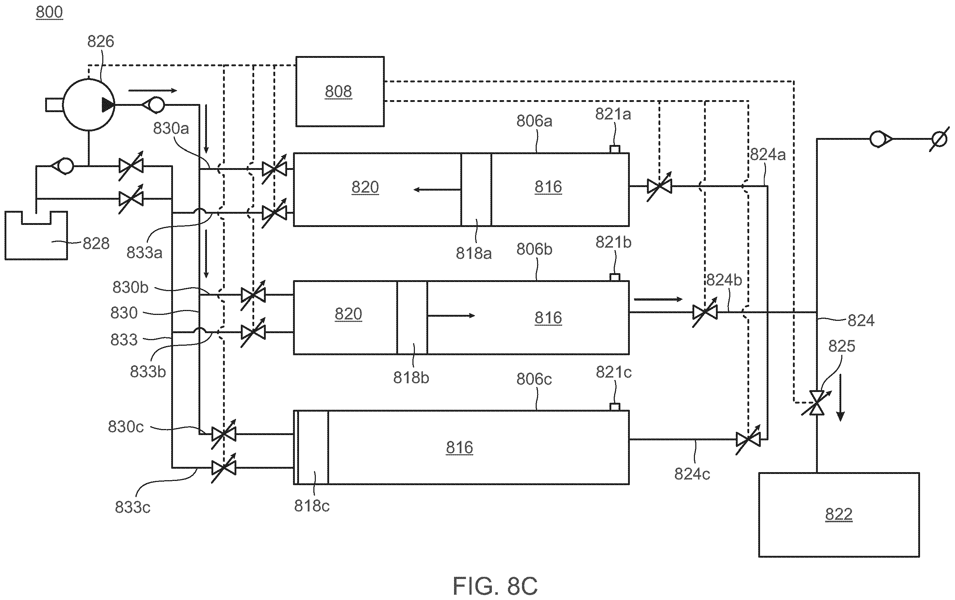

As shown by FIG. 8C, when the minimum mass of fuel in the tank 806a has been reached, the control system 808 closes the first fuel line 824a and first fluid inlet line 830a and opens the first fluid outlet line 833a to allow the remaining gaseous fuel 816 in the first tank 806a to expand and expel the fluid 820 from the first tank 806a.

At the same time, the control system 808 opens a first fuel line 824b for the second tank 806b to supply fuel 816 from the second tank 806b to the engine 822, so that the supply of fuel 816 to the engine is uninterrupted. As with the first tank 806a, when the fuel pressure reduces to a minimum working pressure in the second tank 806b, the control system 808 controls the pump 826 and second intake line 830b to selectively pump fluid 820 into the second fuel tank 806b to maintain the fuel 816 above a minimum working pressure until the minimum mass of fuel in the second tank 806b has been reached, and so on.

It should be understood that other arrangements, with different tanks supplying fuel and/or being refilled in series and/or parallel, are contemplated.

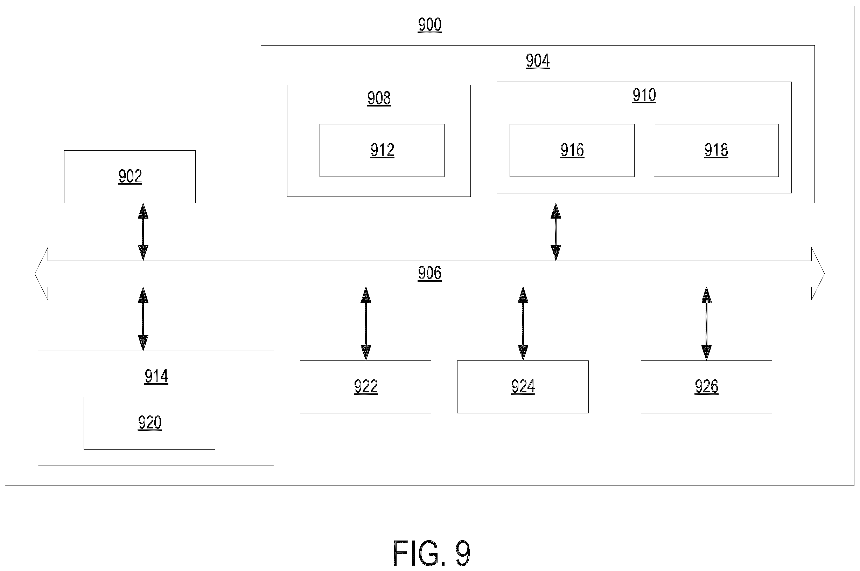

FIG. 9 is a schematic diagram of a computer system 900 for implementing examples disclosed herein. The computer system 900 is adapted to execute instructions from a computer-readable medium to perform these and/or any of the functions or processing described herein. The computer system 900 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 900 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 900 may comprise at least one computing device or electronic device capable of including firmware, hardware, and/or executing software instructions to implement the functionality described herein. The computer system 900 may include processing circuitry 902 (e.g., processing circuitry including one or more processor devices or control units), a memory 904, and a system bus 906. The computer system 900 may include at least one computing device having the processing circuitry 902. The system bus 906 provides an interface for system components including, but not limited to, the memory 904 and the processing circuitry 902. The processing circuitry 902 may include any number of hardware components for conducting data or signal processing or for executing computer code stored in memory 904. The processing circuitry 902 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 902 may further include computer executable code that controls operation of the programmable device.

The system bus 906 may be any of several types of bus structures that may further interconnect to a memory bus (with or without a memory controller), a peripheral bus, and/or a local bus using any of a variety of bus architectures. The memory 904 may be one or more devices for storing data and/or computer code for completing or facilitating methods described herein. The memory 904 may include database components, object code components, script components, or other types of information structure for supporting the various activities herein. Any distributed or local memory device may be utilized with the systems and methods of this description. The memory 904 may be communicably connected to the processing circuitry 902 (e.g., via a circuit or any other wired, wireless, or network connection) and may include computer code for executing one or more processes described herein. The memory 904 may include non-volatile memory 908 (e.g., read-only memory (ROM), erasable programmable read-only memory (EPROM), electrically erasable programmable read-only memory (EEPROM), etc.), and volatile memory 910 (e.g., random-access memory (RAM)), or any other medium which can be used to carry or store desired program code in the form of machine-executable instructions or data structures and which can be accessed by a computer or other machine with processing circuitry 902. A basic input/output system (BIOS) 912 may be stored in the non-volatile memory 908 and can include the basic routines that help to transfer information between elements within the computer system 900.

The computer system 900 may further include or be coupled to a non-transitory computer-readable storage medium such as the storage device 914, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 914 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 914 and/or in the volatile memory 910, which may include an operating system 916 and/or one or more program modules 918. All or a portion of the examples disclosed herein may be implemented as a computer program 920 stored on a transitory or non-transitory computer-usable or computer-readable storage medium (e.g., single medium or multiple media), such as the storage device 914, which includes complex programming instructions (e.g., complex computer-readable program code) to cause the processing circuitry 902 to carry out actions described herein. Thus, the computer-readable program code of the computer program 920 can comprise software instructions for implementing the functionality of the examples described herein when executed by the processing circuitry 902. In some examples, the storage device 914 may be a computer program product (e.g., readable storage medium) storing the computer program 920 thereon, where at least a portion of a computer program 920 may be loadable (e.g., into a processor) for implementing the functionality of the examples described herein when executed by the processing circuitry 902. The processing circuitry 902 may serve as a controller or control system for the computer system 900 that is to implement the functionality described herein.

The computer system 900 may include an input device interface 922 configured to receive input and selections to be communicated to the computer system 900 when executing instructions, such as from a keyboard, mouse, touch-sensitive surface, etc. Such input devices may be connected to the processing circuitry 902 through the input device interface 922 coupled to the system bus 906 but can be connected through other interfaces, such as a parallel port, an Institute of Electrical and Electronic Engineers (IEEE) 1394 serial port, a Universal Serial Bus (USB) port, an IR interface, and the like. The computer system 900 may include an output device interface 924 configured to forward output, such as to a display, a video display unit (e.g., a liquid crystal display (LCD) or a cathode ray tube (CRT)). The computer system 900 may include a communications interface 926 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Additional examples include:
Example 1. A method comprising:
   measuring, by a pressure sensor, a pressure of pressurized gaseous fuel in a gaseous fuel tank of a vehicle;
   determining, by the processing circuitry, a mass of remaining gaseous fuel in the fuel tank based on an operation cycle of a liquid fluid pump that pumps a liquid fluid into a liquid fluid reservoir in fluid communication with the gaseous fuel tank; and
   controlling, by processing circuitry, the liquid fluid pump to maintain the pressure of the gaseous fuel between a minimum pressure and a maximum pressure.
Example 2. The method example 1, wherein determining the mass of remaining gaseous fuel in the fuel tank further comprises:
   determining, by the processing circuitry, of a number of revolutions of the liquid fuel pump during a predetermined time period; and
   determining the mass of remaining gaseous fuel in the fuel tank based on the determined number of revolutions of the liquid fuel pump and a current measured pressure of the gaseous fuel.
Example 3. The method example 2, wherein determining the mass of remaining gaseous fuel in the fuel tank further comprises:
   determining, based on the determined number of revolutions of the liquid fuel pump, a volume of the fluid pumped by the liquid fuel pump during the predetermined time period.
Example 4. The method example 1, wherein determining the mass of remaining gaseous fuel in the fuel tank further comprises:
   determining, by the processing circuitry, a rate of change of a volume of the liquid fluid (dV) pumped by the liquid fluid pump during a predetermined time period;
   determining, by the processing circuitry, a rate of change a change of the pressure (dP) of the gaseous fuel in the predetermine time period;
   determining, by the processing circuitry, a relationship between dP and dV; and
   determining, by the processing circuitry, the mass of remaining gaseous fuel in the fuel tank based on the determined relationship.
Example 5. The method example 4, wherein determining, by the processing circuitry, a relationship between dP and dV comprises calculating, by the processing circuitry, a derivative of the rate of change of the pressure vs. the rate of change of the volume of liquid fluid (dP/dV), and
   wherein determining the mass of remaining gaseous fuel in the fuel tank based on the calculated derivative.
Example 6. The method of any preceding example, further comprising:
   displaying, by a fuel gauge of the vehicle, an indication the determined mass of remaining gaseous fuel.
Example 7. The method of any preceding example, wherein the gaseous fuel tank comprises a flexible bladder disposed in the liquid fuel reservoir such that pumping the fluid into the liquid flue reservoir applies pressure to the flexible bladder to increase the pressure of the gaseous fuel.
Example 8. The method of any preceding example, wherein the gaseous fuel tank comprises a fuel side of a movable piston disposed in a fluid container,
   wherein the liquid fluid reservoir comprises a fluid side of the movable piston in the fluid container, such that pumping the fluid into the liquid fluid side of the movable piston causes the piston to move toward the fuel side to compress the fuel in the fuel side of the fluid container.
Example 9. A gaseous fuel system comprising:
   a gaseous fuel tank for storing pressurized gaseous fuel;
   a pressure sensor for measuring a pressure of the pressurized gaseous fuel in the gaseous fuel tank;
   a liquid fluid pump for pumping a liquid fluid into a liquid fluid reservoir in fluid communication with the gaseous fuel tank to apply increase the pressure of the gaseous fuel; and
   processing circuitry in communication with the liquid fuel pump to control the liquid fuel pump to:
      determine a mass of remaining gaseous fuel in the fuel tank based on an operation cycle of the liquid fluid pump; and
      control the liquid fluid pump to maintain the pressure of the gaseous fuel between a minimum pressure and a maximum pressure.
Example 10. The system of example 9, wherein the determination of the mass of remaining gaseous fuel in the fuel tank further comprises:
   a determination, by the processing circuitry, of a number of revolutions of the liquid fuel pump during a predetermined time period; and
   a determination of the mass of remaining gaseous fuel in the fuel tank based on the determined number of revolutions of the liquid fuel pump and a current measured pressure of the gaseous fuel.
Example 11. The system of example 10, wherein the determination the mass of remaining gaseous fuel in the fuel tank further comprises:
   a determination, based on the determined number of revolutions of the liquid fuel pump, a volume of the fluid pumped by the liquid fuel pump during the predetermined time period.
Example 12. The system of example 9, wherein the determination the mass of remaining gaseous fuel in the fuel tank further comprises:
   a determination, by the processing circuitry, a rate of change of a volume of the liquid fluid (dV) pumped by the liquid fluid pump during a predetermined time period;
   a determination, by the processing circuitry, a rate of change a change of the pressure (dP) of the gaseous fuel in the predetermine time period;
   a determination, by the processing circuitry, a relationship between dP and dV; and
   a determination, by the processing circuitry, the mass of remaining gaseous fuel in the fuel tank based on the determined relationship.
Example 13. The system of example 12, wherein the determination, by the processing circuitry, a relationship between dP and dV comprises a calculation, by the processing circuitry, a derivative of the rate of change of the pressure vs. the rate of change of the volume of liquid fluid (dP/dV), and
   wherein the determination the mass of remaining gaseous fuel in the fuel tank is based on the calculated derivative.
Example 14. The system of any of examples 9-13, further comprising:
   a fuel gauge, wherein the instructions further cause the processing circuitry to cause the fuel gauge to display an indication of the determined mass of remaining gaseous fuel.
Example 15. The system of any of examples 9-14, wherein the gaseous fuel tank comprises a flexible bladder disposed in the liquid fuel reservoir such that pumping the fluid into the liquid flue reservoir applies pressure to the flexible bladder to increase the pressure of the gaseous fuel.
Example 16. The system of any of examples 9-15, wherein the gaseous fuel tank comprises a fuel side of a movable piston disposed in a fluid container,
   wherein the liquid fluid reservoir comprises a fluid side of the movable piston in the fluid container, such that pumping the fluid into the liquid fluid side of the movable piston causes the piston to move toward the fuel side to compress the fuel in the fuel side of the fluid container.
Example 17. A non-tangible computer readable medium comprising machine-readable instructions that, when executed by processing circuitry, cause the processing circuitry to
   measure a pressure of pressurized gaseous fuel in a gaseous fuel tank of a vehicle;
   determine, by the processing circuitry, a mass of remaining gaseous fuel in the fuel tank based on an operation cycle of a liquid fluid pump that pumps a liquid fluid into a liquid fluid reservoir in fluid communication with the gaseous fuel tank; and
   control, by processing circuitry, the liquid fluid pump to maintain the pressure of the gaseous fuel between a minimum pressure and a maximum pressure.
Example 18. The computer readable medium of example 17, wherein determining the mass of remaining gaseous fuel in the fuel tank further comprises:
   determining, by the processing circuitry, of a number of revolutions of the liquid fuel pump during a predetermined time period;
   determining, based on the determined number of revolutions of the liquid fuel pump, a volume of the fluid pumped by the liquid fuel pump during the predetermined time period; and
   determining the mass of remaining gaseous fuel in the fuel tank based on the determined volume of the fluid pumped by the liquid fuel pump and a current measured pressure of the gaseous fuel.
Example 19. The computer readable medium of example 17, wherein determining the mass of remaining gaseous fuel in the fuel tank further comprises:
   determining, by the processing circuitry, a rate of change of a volume of the liquid fluid (dV) pumped by the liquid fluid pump during a predetermined time period;
   determining, by the processing circuitry, a rate of change a change of the pressure (dP) of the gaseous fuel in the predetermine time period;
   calculating, by the processing circuitry, a derivative of the rate of change of the pressure vs. the rate of change of the volume of liquid fluid (dP/dV); and
   determining, by the processing circuitry, the mass of remaining gaseous fuel in the fuel tank based on the calculated derivative.
Example 20. The computer readable medium of any of examples 17-19, wherein the instructions further cause the processing circuitry to:
   cause a fuel gauge of the vehicle to display an indication the determined mass of remaining gaseous fuel.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method comprising:
measuring, by a pressure sensor (221), a pressure of pressurized gaseous fuel in a gaseous fuel tank of a vehicle (100);
determining, by processing circuitry (110; 902) of a computer system (108; 900), a mass of remaining gaseous fuel in the fuel tank based on an operation cycle of a liquid fluid pump (226) that pumps a liquid fluid into a liquid fluid reservoir in fluid communication with the gaseous fuel tank; and
controlling, by the processing circuitry (110; 902), the liquid fluid pump (226) to maintain the pressure of the gaseous fuel between a minimum pressure and a maximum pressure.

2. The method of claim 1, wherein determining the mass of remaining gaseous fuel in the fuel tank further comprises:
determining, by the processing circuitry (110; 902), of a number of revolutions of the liquid fuel pump (226) during a predetermined time period; and
determining, by the processing circuitry (110; 902), the mass of remaining gaseous fuel in the fuel tank based on the determined number of revolutions of the liquid fuel pump (226) and a current measured pressure of the gaseous fuel.

3. The method of any of claims 1-2, wherein determining the mass of remaining gaseous fuel in the fuel tank further comprises:
determining, by the processing circuitry (110; 902), based on the determined number of revolutions of the liquid fuel pump (226), a volume of the fluid pumped by the liquid fuel pump (226) during the predetermined time period.

4. The method of any of claims 1-3, wherein determining the mass of remaining gaseous fuel in the fuel tank further comprises:
determining, by the processing circuitry (110; 902), a rate of change of a volume of the liquid fluid (dV) pumped by the liquid fluid pump during a predetermined time period;
determining, by the processing circuitry (110; 902), a rate of change a change of the pressure (dP) of the gaseous fuel in the predetermine time period;
determining, by the processing circuitry (110; 902), a relationship between dP and dV; and
determining, by the processing circuitry (110; 902), the mass of remaining gaseous fuel in the fuel tank based on the determined relationship.

5. The method of claim 4, wherein determining, by the processing circuitry (110; 902), a relationship between dP and dV comprises calculating, by the processing circuitry (110; 902), a derivative of the rate of change of the pressure vs. the rate of change of the volume of liquid fluid (dP/dV), and
wherein the mass of remaining gaseous fuel in the fuel tank is determined based on the calculated derivative.

6. The method of any of claims 1-5, further comprising:
displaying, by a fuel gauge (114) of the vehicle (100), an indication of the determined mass of remaining gaseous fuel.

7. The method of any of claims 1-6, wherein the gaseous fuel tank comprises a flexible bladder (750) disposed in a liquid fuel reservoir such that pumping the fluid into the liquid fluid reservoir applies pressure to the flexible bladder (750) to increase the pressure of the gaseous fuel.

8. The method of claim 7, wherein the gaseous fuel tank comprises a fuel side of a movable piston (218) disposed in a fluid container,
wherein the liquid fluid reservoir comprises a fluid side of the movable piston (218) in the fluid container, such that pumping the fluid into the liquid fluid side of the movable piston (218) causes the piston (218) to move toward the fuel side to compress the fuel in the fuel side of the fluid container.

9. A gaseous fuel system comprising:
a gaseous fuel tank for storing pressurized gaseous fuel;
a pressure sensor (221) for measuring a pressure of the pressurized gaseous fuel in the gaseous fuel tank;
a liquid fluid pump (226) for pumping a liquid fluid into a liquid fluid reservoir in fluid communication with the gaseous fuel tank to apply increase the pressure of the gaseous fuel; and
processing circuitry (110; 902) of a computer system (108; 900) in communication with the liquid fuel pump (226) to control the liquid fuel pump (226) to:
determine a mass of remaining gaseous fuel in the fuel tank based on an operation cycle of the liquid fluid pump (226); and
control the liquid fluid pump (226) to maintain the pressure of the gaseous fuel between a minimum pressure and a maximum pressure.

10. The gaseous fuel system of claim 9, wherein the determination of the mass of remaining gaseous fuel in the fuel tank further comprises:
a determination, by the processing circuitry (110; 902), of a number of revolutions of the liquid fuel pump (226) during a predetermined time period; and
a determination, by the processing circuitry (110; 902), of the mass of remaining gaseous fuel in the fuel tank based on the determined number of revolutions of the liquid fuel pump (226) and a current measured pressure of the gaseous fuel.

11. The gaseous fuel system of claim 10, wherein the determination the mass of remaining gaseous fuel in the fuel tank further comprises:
a determination, by the processing circuitry (110; 902), based on the determined number of revolutions of the liquid fuel pump (226), a volume of the fluid pumped by the liquid fuel pump (226) during the predetermined time period.

12. The gaseous fuel system of any of claims 9-11, wherein the determination the mass of remaining gaseous fuel in the fuel tank further comprises:
a determination, by the processing circuitry (110; 902), a rate of change of a volume of the liquid fluid (dV) pumped by the liquid fluid pump (226) during a predetermined time period;
a determination, by the processing circuitry (110; 902), a rate of change a change of the pressure (dP) of the gaseous fuel in the predetermined time period;
a determination, by the processing circuitry (110; 902), a relationship between dP and dV; and
a determination, by the processing circuitry (110; 902), the mass of remaining gaseous fuel in the fuel tank based on the determined relationship.

13. The gaseous fuel system of claim 12, wherein the determination, by the processing circuitry (110; 902), of the relationship between dP and dV comprises a calculation, by the processing circuitry (110; 902), of a derivative of the rate of change of the pressure in relation to the rate of change of the volume of liquid fluid (dP/dV), and
wherein the determination, by the processing circuitry (110; 902), of the mass of remaining gaseous fuel in the fuel tank is based on the calculated derivative.

14. The gaseous fuel system of any of claims 9-13, further comprising:
a fuel gauge (114), wherein the processing circuitry (110; 902) is further configured to cause the fuel gauge (114) to display an indication of the determined mass of remaining gaseous fuel.

15. A non-transitory computer readable storage medium comprising machine-readable instructions, which when executed by processing circuitry (110; 902), cause the processing circuitry (110; 902) to perform the method of any of claims 1-8.

## Amended claims

### Amended claims in accordance with Rule 137(2) EPC.

1. A method comprising:
measuring, by a pressure sensor (221), a pressure of pressurized gaseous fuel in a gaseous fuel tank of a vehicle (100);
determining, by processing circuitry (110; 902) of a computer system (108; 900), a mass of remaining gaseous fuel in the fuel tank based on an operation cycle of a liquid fluid pump (226) that pumps a liquid fluid into a liquid fluid reservoir in fluid communication with the gaseous fuel tank; and
controlling, by the processing circuitry (110; 902), the liquid fluid pump (226) to maintain the pressure of the gaseous fuel between a minimum pressure and a maximum pressure,
wherein determining the mass of remaining gaseous fuel in the fuel tank further comprises:
determining, by the processing circuitry (110; 902), a rate of change of a volume of the liquid fluid (dV) pumped by the liquid fluid pump (226) during a predetermined time period;
determining, by the processing circuitry (110; 902), a rate of change of the pressure (dP) of the gaseous fuel in the predetermine time period;
determining, by the processing circuitry (110; 902), a relationship between dP and dV; and
determining, by the processing circuitry (110; 902), the mass of remaining gaseous fuel in the fuel tank based on the determined relationship.

2. The method of claim 1, wherein determining the mass of remaining gaseous fuel in the fuel tank further comprises:
determining, by the processing circuitry (110; 902), of a number of revolutions of the liquid fluid pump (226) during a predetermined time period; and
determining, by the processing circuitry (110; 902), the mass of remaining gaseous fuel in the fuel tank based on the determined number of revolutions of the liquid fluid pump (226) and a current measured pressure of the gaseous fuel.

3. The method of claim 2, wherein determining the mass of remaining gaseous fuel in the fuel tank further comprises:
determining, by the processing circuitry (110; 902), based on the determined number of revolutions of the liquid fluid pump (226), a volume of the fluid pumped by the liquid fluid pump (226) during the predetermined time period.

4. The method of any preceding claim, wherein determining, by the processing circuitry (110; 902), a relationship between dP and dV comprises calculating, by the processing circuitry (110; 902), a derivative of the rate of change of the pressure vs. the rate of change of the volume of liquid fluid (dP/dV), and
wherein the mass of remaining gaseous fuel in the fuel tank is determined based on the calculated derivative.

5. The method of any of claims 1-4, further comprising:
displaying, by a fuel gauge (114) of the vehicle (100), an indication of the determined mass of remaining gaseous fuel.

6. The method of any of claims 1-5, wherein the gaseous fuel tank comprises a flexible bladder (750) disposed in a liquid fuel reservoir such that pumping the fluid into the liquid fluid reservoir applies pressure to the flexible bladder (750) to increase the pressure of the gaseous fuel.

7. The method of any of claims 1-5, wherein the gaseous fuel tank comprises a fuel side of a movable piston (218) disposed in a fluid container,
wherein the liquid fluid reservoir comprises a fluid side of the movable piston (218) in the fluid container, such that pumping the fluid into the liquid fluid side of the movable piston (218) causes the piston (218) to move toward the fuel side to compress the fuel in the fuel side of the fluid container.

8. A gaseous fuel system for a vehicle (100), comprising:
a gaseous fuel tank for storing pressurized gaseous fuel;
a pressure sensor (221) for measuring a pressure of the pressurized gaseous fuel in the gaseous fuel tank;
a liquid fluid pump (226) for pumping a liquid fluid into a liquid fluid reservoir in fluid communication with the gaseous fuel tank to apply increase the pressure of the gaseous fuel; and
processing circuitry (110; 902) of a computer system (108; 900) in communication with the liquid fluid pump (226) to control the liquid fluid pump (226) to:
determine a mass of remaining gaseous fuel in the fuel tank based on an operation cycle of the liquid fluid pump (226); and
control the liquid fluid pump (226) to maintain the pressure of the gaseous fuel between a minimum pressure and a maximum pressure,
wherein the determination of the mass of remaining gaseous fuel in the fuel tank further comprises:
a determination, by the processing circuitry (110; 902), of a rate of change of a volume of the liquid fluid (dV) pumped by the liquid fluid pump during a predetermined time period;
a determination, by the processing circuitry (110; 902), of a rate of change of the pressure (dP) of the gaseous fuel in the predetermine time period;
a determination, by the processing circuitry (110; 902), of a relationship between dP and dV; and
a determination, by the processing circuitry (110; 902), of the mass of remaining gaseous fuel in the fuel tank based on the determined relationship.

9. The gaseous fuel system of claim 8, wherein the determination of the mass of remaining gaseous fuel in the fuel tank further comprises:
a determination, by the processing circuitry (110; 902), of a number of revolutions of the liquid fluid pump (226) during a predetermined time period; and
a determination, by the processing circuitry (110; 902), of the mass of remaining gaseous fuel in the fuel tank based on the determined number of revolutions of the liquid fluid pump (226) and a current measured pressure of the gaseous fuel.

10. The gaseous fuel system of claim 9, wherein the determination the mass of remaining gaseous fuel in the fuel tank further comprises:
a determination, by the processing circuitry (110; 902), based on the determined number of revolutions of the liquid fluid pump (226), a volume of the fluid pumped by the liquid fluid pump (226) during the predetermined time period.

11. The gaseous fuel system of any of claims 8-10, wherein the determination, by the processing circuitry (110; 902), of the relationship between dP and dV comprises a calculation, by the processing circuitry (110; 902), of a derivative of the rate of change of the pressure in relation to the rate of change of the volume of liquid fluid (dP/dV), and
wherein the determination, by the processing circuitry (110; 902), of the mass of remaining gaseous fuel in the fuel tank is based on the calculated derivative.

12. The gaseous fuel system of any of claims 8-11, further comprising:
a fuel gauge (114), wherein the processing circuitry (110; 902) is further configured to cause the fuel gauge (114) to display an indication of the determined mass of remaining gaseous fuel.

13. A non-transitory computer readable storage medium comprising machine-readable instructions, which when executed by processing circuitry (110; 902) of the gaseous fuel system of claim 8, cause the processing circuitry (110; 902) to perform the method of any of claims 1-7.
